# EUROPÄISCHE PATENTSCHRIFT

(11) **EP 2 761 145 B1**
(45) Veröffentlichungstag und Bekanntmachung des Hinweises auf die Patenterteilung: **24.06.2015**
(21) Anmeldenummer: 12769963.5
(22) Anmeldetag: 06.09.2012
(51) Int. Cl.: F01N 3/01, F01N 13/00, F01N 3/027

(54) **HALTERUNG MIT MINDESTENS EINER ELEKTRODE**
RETAINER HAVING AT LEAST ONE ELECTRODE
SUPPORT MUNI D'AU MOINS UNE ÉLECTRODE

(30) Priorität: 28.09.2011 DE 102011115228
(43) Veröffentlichungstag der Anmeldung: 06.08.2014
(73) Patentinhaber: Emitec Gesellschaft für Emissionstechnologie mbH, 53797 Lohmar (DE)
(72) Erfinder: HODGSON, Jan, 53840 Troisdorf (DE); VORSMANN, Christian, 51105 Köln (DE)
(74) Vertreter: Rössler, Matthias
(86) Internationale Anmeldenummer: PCT/EP2012/067359
(87) Internationale Veröffentlichungsnummer: WO 2013/045248

(56) Entgegenhaltungen:
- EP-A2- 2 305 976
- JP-A- 2005 240 634
- JP-A- 2006 026 483
- JP-A- 2006 342 730

## Beschreibung

Die vorliegende Erfindung betrifft eine Halterung mit mindestens einer Elektrode zur Erzeugung elektrischer Felder in einer Abgasleitung.

Bei Kraftfahrzeugen mit mobilen Verbrennungskraftmaschinen und insbesondere bei Kraftfahrzeugen mit Dieselantrieb sind regelmäßig Mengen an Rußpartikeln in dem Abgas der Verbrennungskraftmaschine enthalten, welche nicht in die Umwelt abgegeben werden dürfen. Dies ist durch entsprechende Abgasverordnungen vorgegeben, die Grenzwerte für die Anzahl und die Masse an Rußpartikeln pro Abgasgewicht oder Abgasvolumen sowie teilweise auch für ein gesamtes Kraftfahrzeug vorgeben. Rußpartikel sind insbesondere nicht verbrannte Kohlenstoffe und Kohlenwasserstoffe im Abgas.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" beziehungsweise "Elektrofilter" bekannt.

Bei "Elektrofiltern" werden durch die Bereitstellung eines elektrischen Feldes und/oder eines Plasmas eine Agglomeration von kleinen Rußpartikeln zu größeren Rußpartikeln und/oder eine elektrische Ladung bei Rußpartikeln bewirkt. Elektrisch geladene Rußpartikel und/oder größere Rußpartikel sind regelmäßig in einem Filtersystem deutlich einfacher abzuscheiden. Rußpartikel-Agglomerate werden aufgrund ihrer größeren Massenträgheit in einer Abgasströmung träger transportiert und lagern sich an Umlenkstellen einer Abgasströmung somit einfacher ab. Elektrisch geladene Rußpartikel werden aufgrund ihrer Ladung hin zu Oberflächen gezogen, an welchen sie anlagern und ihre Ladung abgeben. Auch dies erleichtert die Entfernung von Rußpartikeln aus dem Abgasstrom im Betrieb von Kraftfahrzeugen.

So wurde für solche Elektrofilter bereits der Einsatz mehrerer Sprühelektroden und Kollektorelektroden vorgeschlagen, die in der Abgasleitung positioniert werden. Dabei werden beispielsweise eine zentrale Sprühelektrode, welche etwa mittig durch die Abgasleitung verläuft, und eine umgebende Mantelfläche der Abgasleitung als Kollektorelektrode dazu genutzt, einen Kondensator auszubilden. Mit dieser Anordnung von Sprühelektrode und der Kollektorelektrode wird quer zur Strömungsrichtung des Abgases ein elektrisches Feld gebildet, wobei die Sprühelektrode beispielsweise mit einer Hochspannung betrieben werden kann, die im Bereich von ca. 15 kV [15.000 Volt] liegt. Hierdurch können sich insbesondere Corona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulombkräfte zur Kollektorelektrode.

Neben Systemen, bei denen die Abgasleitung als Kollektorelektrode ausgeführt ist, sind auch Systeme bekannt, bei denen die Kollektorelektrode beispielsweise als Drahtgitter ausgebildet ist, dabei erfolgt die Anlagerung von Partikeln an dem Drahtgitter zu dem Zweck, die Partikel ggf. mit weiteren Partikeln zusammenzuführen, um so eine Agglomeration zu realisieren. Das das Gitter durchströmende Abgas reißt dann die größeren Partikel wieder mit und führt sie klassischen Filtersystemen zu.

Bei der Anordnung von Sprühelektrode und Kollektorelektrode hintereinander in der Abgasleitung ist es wünschenswert, eine Mehrzahl von Elektroden über den Querschnitt der Abgasleitung zu verteilen, so dass ein gleichmäßig verteiltes elektrisches Feld oder ein über den Querschnitt der Abgasleitung einstellbares elektrisches Feld erzeugt wird. Es stellt sich jedoch regelmäßig das Problem heraus, dass sich durch abgelagerte Rußpartikel an der Elektrode und deren Halterung Kriechströme zwischen der Elektrode und der auf einem anderen elektrischen Potential befindlichen Abgasleitung einstellen. Diese Kriechströme führen zum Beispiel zu einem Aufladen der Abgasleitung und sollten verhindert werden. Es ist bekannt, dass an der Elektrode und der Halterung abgelagerter Ruß regelmäßig durch eine Regeneration, insbesondere durch eine katalytisch gestützte Regeneration und durch kurzzeitiges Aufheizen der Abgase beseitigt werden kann. Damit eine vollständige Regeneration des abgelagerten Rußes auf den Elektroden und deren Halterung nur in zeitlichen großen Abständen durchgeführt werden muss, ist es wünschenswert, Kriechströme für eine möglichst lange Zeit zu unterdrücken oder klein zu halten.

Es ist auch zu berücksichtigen, dass bei der Bereitstellung solcher Komponenten für ein Rußabscheidesystem möglichst einfache Komponenten eingesetzt werden sollen, insbesondere auch solche, die sich im Rahmen einer Serienfertigung kostengünstig herstellen lassen.

Die EP 2 305 976 A2 zeigt eine Vorrichtung zur Reduzierung der Anzahl der Partikel im Abgas einer Verbrennungskraftmaschine. Die Vorrichtung umfasst eine Abgasleitung, in der eine Emissionselektrode ausgebildet ist. Durch Anlegen einer Hochspannung an die Emissionselektrode werden aufgrund einer Koronaentladung die Partikel im Abgas ionisiert. In der Elektrodenhalterung sind eine Vielzahl von Elektrodenspitzen befestigt ist. Zudem weist die Halterung Öffnungen auf, durch die das Abgas hindurchströmen kann. Die Halterung und die Emissionselektroden sind aus einem elektrisch leitendem Material gefertigt.

Hiervon ausgehend ist es Aufgabe der vorliegenden Erfindung, die mit Bezug auf den Stand der Technik geschilderten Probleme zumindest teilweise zu lösen. Insbesondere soll eine Halterung mit einer oder einer Mehrzahl Elektrode(n) angegeben werden, bei der möglichst keine oder nur sehr kleine Kriechströme auftreten.

Diese Aufgaben werden gelöst mit einer Halterung gemäß den Merkmalen des Patentanspruchs 1 und einer Vorrichtung gemäß den Merkmalen des Patentanspruchs 11. Weitere vorteilhafte Ausgestaltungen der Halterung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Die Aufgaben werden gelöst durch eine Halterung mit einer oder einer Mehrzahl Elektrode(n) zur Erzeugung elektrischer Felder in einer Abgasleitung, wobei die Halterung eine Scheibe aus einem elektrisch isolierenden Material mit einer Anströmseite und einer Abströmseite und von der Anströmseite zur Abströmseite für ein Abgas durchströmbare Öffnungen sowie mindestens einen an und/oder in der Scheibe befestigten elektrischen Leiter aufweist und wobei der elektrische Leiter zumindest an der Anströmseite der Scheibe von dem elektrisch isolierenden Material bedeckt ist und in elektrischem Kontakt mit der einen oder der Mehrzahl sich zur Abströmseite hin erstreckenden Elektrode(n) steht.

Die Halterung ist insbesondere ausgelegt, um in der Abgasleitung einer Verbrennungskraftmaschine angeordnet werden zu können. An der Halterung sind bevorzugt mindestens 3, besonders bevorzugt sogar mindestens 10 Elektroden befestigt. In eingebautem Zustand durchströmt das Abgas der Verbrennungskraftmaschine die Abgasleitung und die Halterung, wobei die der Verbrennungskraftmaschine zugewandte Seite der Halterung die Anströmseite bildet und die in Strömungsrichtung gegenüberliegende Seite die Abströmseite der Halterung bildet.

Unter einer Scheibe im Sinne der vorliegenden Erfindung ist ein Körper zu verstehen, dessen Abmessungen quer zur Strömungsrichtung wesentlich größer sind als dessen Abmessungen in Strömungsrichtung, bevorzugt ist eine maximale Länge der Scheibe quer zur Strömungsrichtung mindestens dreimal so groß wie eine maximale Länge der Scheibe in Strömungsrichtung. In der Scheibe sind insbesondere Durchlässe für das Abgas ausgebildet, die sich im Wesentlichen in der Scheibe von der Anströmseite zu der Abströmseite erstrecken und somit die durchströmbaren Öffnungen bilden. Die Scheibe ist insbesondere aus einem elektrisch isolierenden Material gebildet, insbesondere aus einer Keramik.

An und/oder in der Scheibe ist ein elektrischer Leiter befestigt, der die eine oder die Mehrzahl der Elektroden mit einer Spannungsquelle elektrisch leitend verbinden kann. Insbesondere besteht der elektrische Leiter aus einem metallischen Draht oder aus einem gestanzten metallischen Blech. Der elektrische Leiter ist auf der Anströmseite von dem elektrisch isolierenden Material bedeckt, was insbesondere bedeutet, dass das elektrisch isolierende Metall den elektrischen Leiter in Strömungsrichtung des Abgases komplett überdeckt, so dass kein Abgas den elektrischen Leiter direkt anströmen kann.

Im Betrieb durchtritt das in der Abgasleitung strömende Abgas die Halterung durch die Öffnungen, wobei im Folgenden die im Abgas enthaltenen Rußpartikel durch eine Korona- oder Plasmaentladung an der Spitze der Elektrode(n) ionisiert werden. Dadurch, dass der elektrische Leiter auf der Anströmseite von dem elektrischen Material bedeckt ist, lagern sich auf dem elektrischen Leiter an der Anströmseite keine Rußpartikel ab. Eine Ablagerung der Rußpartikel an der Anströmseite findet höchstens auf dem elektrisch isolierenden Material statt. Die Fläche, die von einer Rußschicht bedeckt werden muss, damit ein Kriechstrom von der oder den Elektrode(n) zu der Abgasleitung stattfindet, ist durch die Erfindung erheblich erhöht, wodurch die Wahrscheinlichkeit für das Ausbilden eines Kriechstroms reduziert wird. Die Länge des Wegs des Kriechstroms wird auch als Kriechlänge bezeichnet, die durch die Erfindung erhöht wird

Gemäß einer vorteilhaften Weiterbildung der Erfindung weist der elektrische Leiter eine elektrisch isolierte Verlängerung zur Durchführung durch eine Wand der Abgasleitung auf. Über die elektrisch isolierte Verlängerung des elektrischen Leiters kann der elektrischer Leiter von außerhalb der Abgasleitung mit einer Spannungsquelle verbunden werden, wobei der elektrische Leiter bei der Durchführung durch die Wand bevorzugt von dem elektrisch isolierenden Material umgeben ist.

Es ist auch bevorzugt, dass der elektrische Leiter in mindestens einer Nut in der Scheibe befestigt ist. Eine Nut ist eine Vertiefung in der Scheibe, die insbesondere auf der Abströmseite in der Scheibe ausgebildet ist. Somit ist der elektrische Leiter weiterhin auf der Anströmseite von dem elektrisch isolierenden Material überdeckt. Dies hat auch den Vorteil, dass das Abgas den elektrischen Leiter im Betrieb nicht an seinen Seiten beströmt, so dass höchstens Rußpartikel auf der Abströmseite auf dem elektrischen Leiter abgeschieden werden können. Hierdurch wird weiter die Fläche erhöht, die von Ruß bedeckt sein muss, damit sich ein Kriechstrom zwischen elektrischem Leiter und Abgasleitung ausbildet.

Ferner ist bevorzugt, dass der elektrische Leiter mit einem Verbindungsmaterial, insbesondere mit einem Hochtemperatursilikon, einem Hochtemperaturkleber oder einer Hochtemperaturpaste, an und/oder in der Scheibe befestigt ist. Dieses Verbindungsmaterial ist insbesondere geeignet, die unterschiedlichen Temperaturausdehnungskoeffizienten des elektrisch isolierenden Materials und des elektrischen Leiters zu kompensieren. Somit ist der elektrische Leiter fest mit der Scheibe verbunden, Spannungen zwischen diesen beiden können aber nicht in dem Maße auftreten, dass die Befestigung zwischen beiden zerstört wird.

Gemäß einer besonders bevorzugten Ausführungsform der Erfindung weist die Halterung einen Deckel auf, der auf der Abströmseite der Scheibe angeordnet ist, wobei der Deckel Aussparungen zur Aufnahme der Elektrode(n) aufweist. Der Deckel ist bevorzugt ebenfalls aus dem elektrisch isolierenden Material hergestellt. Bevorzugt umschließen die Scheibe und der Deckel den elektrischen Leiter komplett. Der elektrische Leiter ist somit bevorzugt von allen Seiten von dem elektrisch isolierenden Material umgeben, so dass sich keine Rußpartikel auf dem elektrischen Leiter ablagern können. Eine Ablagerung der Rußpartikel kann höchstens an der oder den Elektrode(n) erfolgen. Es sei darauf hingewiesen, dass unter dem elektrischen Leiter insbesondere diejenigen elektrisch leitfähigen Materialien verstanden werden, die sich im Wesentlichen quer zur Strömungsrichtung in oder an der Scheibe befinden. Abschnitte eines elektrischen Leiters, die sich in Strömungsrichtung erstrecken, werden vielmehr der Elektrode zugeordnet.

Insbesondere kann der Deckel mit der Scheibe durch Kraft-, Form- und/oder Stoffschluss verbunden sein. Um eine stoffschlüssige Verbindung herzustellen, kann zunächst die Scheibe mit dem elektrischen Leiter versehen sein und anschließend der Deckel auf die Scheibe gegossen werden, wobei Öffnungen, die sich bereits in der Scheibe befinden, durch entsprechende Schablonen in dem Deckel erzeugt werden. Der Deckel weist deckungsgleiche Öffnungen wie die Scheibe auf und zusätzlich die Aussparungen, durch die die Elektroden hindurchragen. In diesem Fall sind die Elektroden mit dem elektrischen Leiter innerhalb des elektrisch isolierenden Materials verbunden.

Alternativ kann zunächst die Scheibe mit den elektrischen Leitern versehen werden, wobei anschließend von der Abströmseite der zuvor gefertigte Deckel auf die Scheibe mit den elektrischen Leitern aufgeschoben werden. Hierbei sind insbesondere deckungsgleiche Öffnungen in dem Deckel zu den Öffnungen in der Scheibe vorgesehen und zudem Aussparungen, durch die die Elektroden ragen können.

Ferner ist bevorzugt, dass sich ein Vorsprung vom Deckel um die Aussparung herum in Richtung der Strömungsrichtung erstreckt, so dass auch die Elektrode zu einem wesentlichen Teil ausgehend von dem elektrischen Leiter von dem Deckel umgeben ist. Hierdurch wird die Kriechlänge weiter erhöht.

Gemäß einer weiteren vorteilhaften Weiterbildung der Erfindung ist die eine oder die Mehrzahl der Elektroden und der elektrische Leiter mittels Form-, Kraft und/oder Stoffschluss miteinander verbunden.

Bei einem Formschluss wird durch die räumliche Gestaltung der Elektrode(n) und des elektrischen Leiters und deren Anordnung zueinander eine Relativbewegung zueinander verhindert. Bei einem Kraftschluss wirkt eine Kraft auf die beiden Elemente, die eine Bewegung der Elemente relativ zueinander verhindert. Bei einem Stoffschluss sind die Elemente aufgrund von molekularen Bindungen zwischen den Elementen miteinander verbunden. Ein Stoffschluss kann beispielsweise durch Verschweißen der Elektrode(n) mit dem elektrischen Leiter hergestellt werden. Ein Kraftschluss entsteht beispielsweise durch ein Einschieben der Elektrode(n) in eine Aussparung des Deckels, so dass der Deckel die Elektrode(n) im elektrischen Kontakt mit dem elektrischen Leiter hält.

Besonders bevorzugt ist auch, dass die Scheibe topfförmig ausgebildet ist mit einem zur Abströmseite auskragenden äußeren Bereich. Der auskragende äußere Bereich erstreckt sich somit zur Abströmseite in dieselbe Richtung wie die Elektroden und überdeckt dabei die Innenfläche der Wand der Abgasleitung. Dabei ist der äußere Bereich insbesondere in Kontakt mit der Innenfläche der Wand der Abgasleitung. Auf diese Weise wird auch die Fläche weiter erhöht, die von Ruß bedeckt sein muss, damit sich ein Kriechstrom zwischen den Elektroden und der Abgasleitungswand ausbildet.

Es ist insbesondere auch bevorzugt, dass sich der auskragende äußere Bereich sich über mindestens eine Elektrode hinaus entlang der Abgasleitung erstreckt. Damit ist gemeint, dass die Länge des äußeren Bereichs in Strömungsrichtung ausgehend von der Scheibe länger ist als die Länge einer Elektrode in Strömungsrichtung ausgehend von der Scheibe. Dadurch wird erreicht, dass keine Funkenentladung zwischen der Elektrode und der Wand der Abgasleitung quer zur Strömungsrichtung entstehen kann.

In einer weiteren bevorzugten Ausführungsform der Erfindung ist die Scheibe etwa quer in die Abgasleitung einbaubar und überdeckt einen Querschnitt der Abgasleitung im Wesentlichen vollständig. Das komplette Abgas muss somit durch die Halterung strömen. Auf diese Weise ist auch gewährleistet, dass das komplette Abgas die Elektroden umströmt.

Noch eine weitere vorteilhafte Weiterbildung der Erfindung schlägt vor, dass die Scheibe mindestens einen ersten und einen zweiten elektrischen Leiter aufweist, die von einander elektrisch isoliert sind, wobei eine erste Gruppe und eine zweite Gruppe von Elektroden jeweils mit einem der elektrischen Leiter in elektrischem Kontakt stehen. Es sind somit mindestens zwei elektrische Leiter in der Scheibe befestigt, mit denen jeweils eine Gruppe von Elektroden mit einem Hochspannungsgerät verbunden werden kann. Auf diese Weise können die Elektroden mit unterschiedlichen Potentialen beaufschlagt werden, so dass das elektrische Feld an verschiedene Abgasleitungsgeometrien, Strömungsprofile oder Abgaszusammensetzungen lokal verteilt über den Querschnitt der Abgasleitung angepasst werden kann.

Gemäß einem weiteren Aspekt der Erfindung wird eine Vorrichtung in einer Abgasleitung zur Ionisierung von Rußpartikeln im Abgas einer Verbrennungskraftmaschine vorgeschlagen, umfassend mindestens eine erfindungsgemäße Halterung und einen in Strömungsrichtung nachfolgend angeordneten Partikelabscheider. Die Vorrichtung umfasst insbesondere auch eine Spannungsquelle, die über den elektrischen Leiter mit den Elektroden verbunden ist und eine Gegenelektrode zur Erzeugung eines elektrischen Feldes zwischen den Elektroden und der Gegenelektrode. Damit ist eine Vorrichtung angegeben, die zunächst die im Abgas enthaltenden Partikel ionisiert, wobei die ionisierten Rußpartikel in dem Partikelabscheider abgeschieden werden.

Es ist insbesondere bevorzugt, dass der Partikelabscheider eine Gegenelektrode bildet. Somit hat der Partikelabscheider eine Doppelfunktion, indem er die ionisierten Partikel abscheidet und gleichzeitig zur Erzeugung und/oder Form des elektrischen Felds beiträgt.

Die Erfindung findet insbesondere Anwendung im Automobilsektor, zum Beispiel in einem Kraftfahrzeug, das eine Verbrennungskraftmaschine mit einem Abgassystem hat, wobei das Abgassystem wenigstens eine Vorrichtung der erfindungsgemäßen Art aufweist.

Die Erfindung sowie das technische Umfeld werden nachfolgend anhand der Figuren beispielhaft erläutert. Die Figuren zeigen besonders bevorzugte Ausführungsvarianten der Erfindung, auf die diese jedoch nicht beschränkt ist. Es zeigen schematisch:
- Fig. 1:: ein Kraftfahrzeug mit einer Ausführungsform der erfindungsgemäßen Halterung,
- Fig. 2:: eine Abgasleitung mit einer Ausführungsform der erfindungsgemäßen Halterung,
- Fig. 3:: einen Querschnitt durch eine Ausführungsform der erfindungsgemäßen Halterung, und
- Fig. 4:: einen Deckel einer Ausführungsform einer erfindungsgemäßen Halterung.

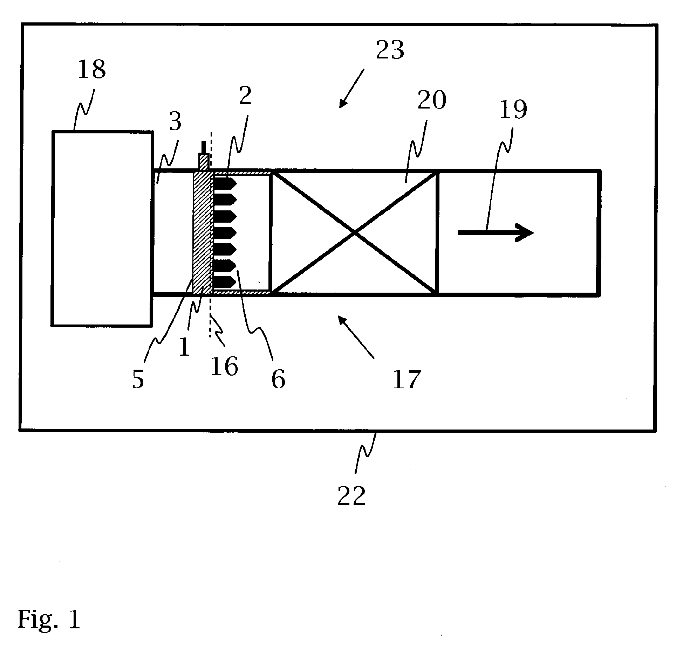

Fig. 1 zeigt schematisch ein Kraftfahrzeug 22 mit einer Verbrennungskraftmaschine 18 und einem daran angeschlossenen Abgassystem 23. Das Abgassystem 23 umfasst eine Abgasleitung 3, in der eine Ausführungsform der Vorrichtung 17 mit einer erfindungsgemäßen Halterung 1 mit Elektroden 2 ausgebildet ist. Das Abgas durchströmt die Halterung 1 in einer Strömungsrichtung 19 von einer Anströmseite 5 zu einer Abströmseite 6. In Strömungsrichtung 19 nach der Halterung 1 ist in der Abgasleitung 3 ein zur Vorrichtung 17 gehörender Partikelabscheider 20 angeordnet. Im Betrieb durchströmt Rußpartikel enthaltendes Abgas der Verbrennungskraftmaschine 18 zunächst die Öffnungen der Halterung 1 und tritt in den Bereich der Elektroden 2 ein. Dort werden die Rußpartikel durch eine Korona- oder Plasmaentladung an den Spitzen der Elektroden 2 ionisiert und die ionisierten Rußpartikel werden in dem Partikelabscheider 20 abgeschieden.

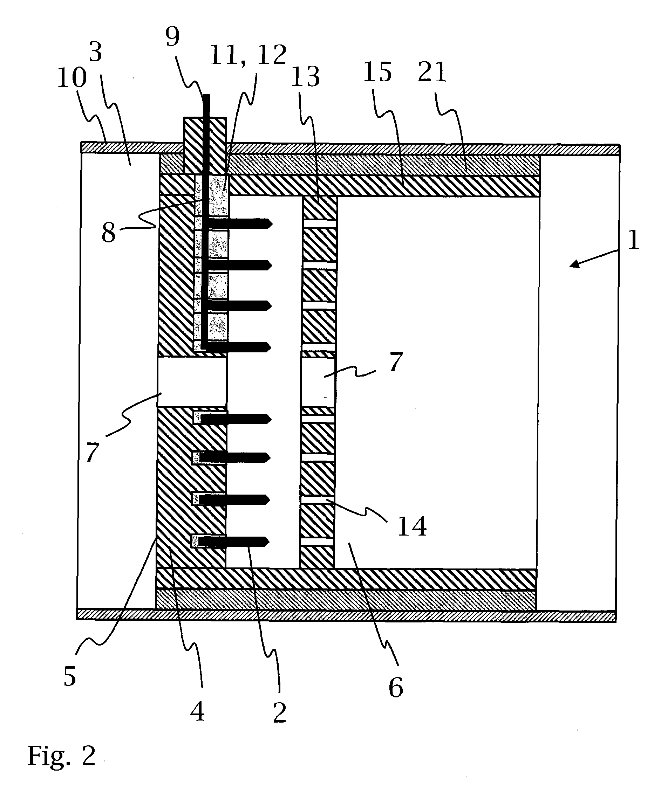

Anhand der Fig. 2 bis 4 wird im Folgenden eine Ausführungsform der Halterung näher erläutert.

Fig. 2 zeigt schematisch einen Längsschnitt durch eine Ausführungsform einer Halterung 1, in einer Abgasleitung 3. Die Halterung 1 ist über eine Quellmatte 21 in der Abgasleitung 3, die durch eine Wand 10 begrenzt ist, befestigt. Die Halterung 1 umfasst eine Scheibe 4 mit Öffnungen 7, die sich von einer Anströmseite 5 zu einer Abströmseite 6 erstrecken. In der Scheibe 4 ist ein elektrischer Leiter 8 befestigt, der elektrisch leitend mit den Elektroden 2 verbunden ist. Die Scheibe 4, die aus einem elektrisch isolierenden Material gefertigt ist, überdeckt den elektrischen Leiter auf der Anströmseite 5 vollständig. Der elektrische Leiter 8 befindet sich in einer Nut 11 der Scheibe 4 und ist dort mit Hilfe eines Verbindungsmaterials 12 befestigt. Der elektrische Leiter 8 weist zudem eine Verlängerung 9 auf, die von elektrisch isolierendem Material umgeben ist, und die sich durch die Wand 10 der Abgasleitung 3 erstreckt. Dort kann der elektrische Leiter 8 mit einer Spannungsquelle verbunden werden.

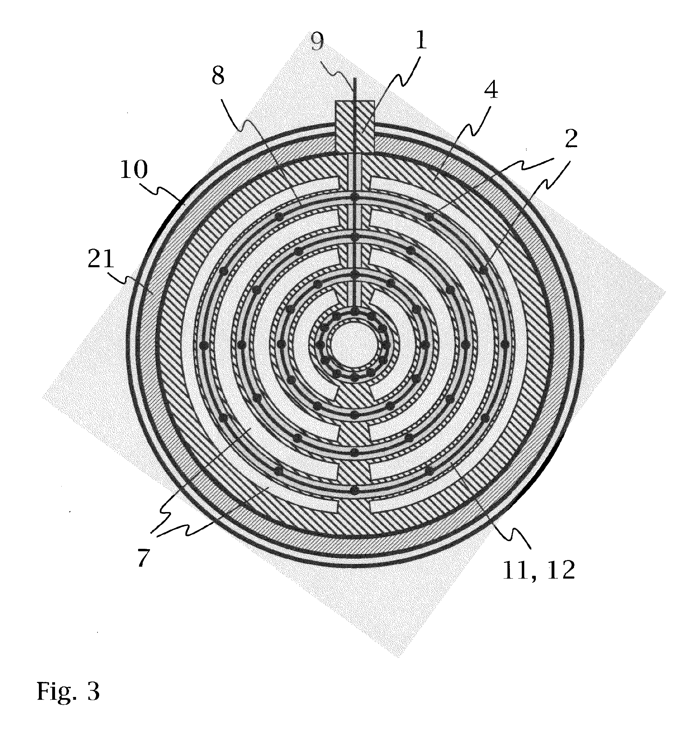

Die Halterung 1 weist zudem einen äußeren Bereich 15 aus dem elektrisch isolierenden Material auf, der sich in Kontakt mit der Wand 10 in der Abgasleitung 3 in Strömungsrichtung 19 auf der Abströmseite 6 erstreckt. Die Halterung 1 umfasst ferner einen Deckel 13, der hier getrennt von der Scheibe 4 dargestellt ist, aber im Betrieb auf die Scheibe 4 aufgeschoben und dort fixiert ist. Der Deckel 13 weist Aussparungen 14 auf, durch die die Elektroden 2 hindurch ragen. Zudem weist der Deckel 13 Öffnungen 7 auf, die im montierten Zustand deckungsgleich mit den Öffnungen 7 an der Scheibe 4 sind. Ein Querschnitt 16 durch die Abgasleitung 3 wird mit Bezug zu Figur 3 weiter erläutert.

In Fig. 3 ist ein Querschnitt 16 durch die Halterung aus Fig. 2 gezeigt. Die Scheibe 4 ist über eine Quellmatte 21 mit der Wand 10 einer Abgasleitung 3 verbunden. Die Scheibe 4 weist Öffnungen 7 auf, durch die im Betrieb das Abgas einer Verbrennungskraftmaschine 18 strömt. In der Scheibe 4 sind Nuten 11 ausgeprägt, in denen über Verbindungsmaterial 12 ein elektrischer Leiter 8 befestigt ist. An dem elektrischen Leiter 8 sind elektrisch leitend Elektroden 2 befestigt. Der elektrische Leiter 8 weist zudem eine Verlängerung 9 auf, die durch die Wand 10 der Abgasleitung ragt, wobei die Verlängerung 9 von einem elektrisch isolierenden Material umgeben ist.

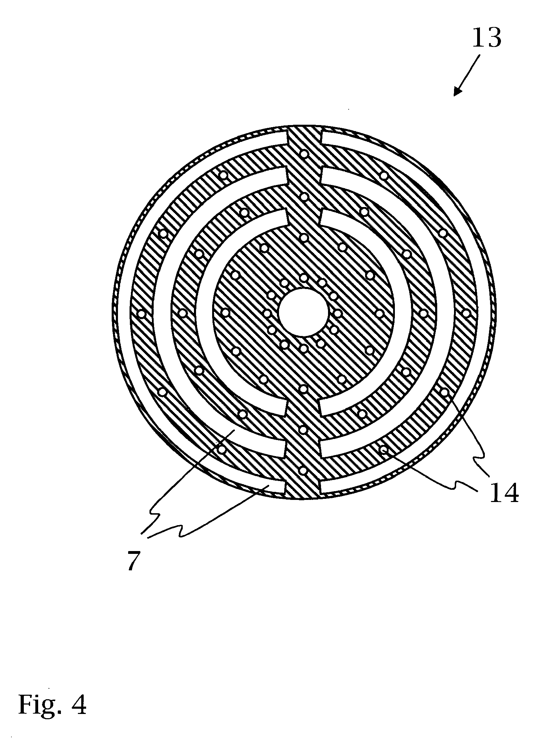

In Fig. 4 ist der Deckel 13 der Fig. 2 im Querschnitt gezeigt. Der Deckel 13 weist Öffnungen 7 auf, die den Öffnungen 7 der Scheibe 4 entsprechen. Zudem sind Aussparungen 14 vorgesehen, durch die die Elektrode 2 im montierten Zustand ragen.

Dadurch, dass der elektrische Leiter 8 im Betrieb komplett von einem isolierenden Material umgeben ist, ist die Fläche vergrößert, die von einer Rußschicht bedeckt sein muss, damit sich ein Kriechstrom ausbilden kann. Somit ist die Kriechlänge vergrößert, wobei gleichzeitig eine Mehrzahl von Elektroden im Abgas angeordnet ist. Die an der Halterung und der Abgasleitung abgelagerten Rußpartikel müssen weniger oft beseitigt werden.

### Bezugszeichenliste

- 1: Halterung
- 2: Elektrode
- 3: Abgasleitung
- 4: Scheibe
- 5: Anströmseite
- 6: Abströmseite
- 7: Öffnung
- 8: elektrischer Leiter
- 9: Verlängerung
- 10: Wand
- 11: Nut
- 12: Verbindungsmaterial
- 13: Deckel
- 14: Aussparung
- 15: äußerer Bereich
- 16: Querschnitt
- 17: Vorrichtung
- 18: Verbrennungskraftmaschine
- 19: Strömungsrichtung
- 20: Partikelabscheider
- 21: Quellmatte
- 22: Kraftfahrzeug
- 23: Abgassystem

## Patentansprüche

1. Halterung (1) mit einer oder einer Mehrzahl Elektrode(n) (2) zur Erzeugung elektrischer Felder in einer Abgasleitung (3), **dadurch gekennzeichnet, dass** die Halterung (1) eine Scheibe (4) aus einem elektrisch isolierenden Material mit einer Anströmseite (5) und einer Abströmseite (6) und von der Anströmseite (5) zur Abströmseite (6) für ein Abgas durchströmbare Öffnungen (7) sowie mindestens einen an und/oder in der Scheibe (4) befestigten elektrischen Leiter (8) aufweist und wobei der elektrische Leiter (8) zumindest an der Anströmseite (5) der Scheibe (4) von dem elektrisch isolierenden Material bedeckt ist und in elektrischem Kontakt mit der einen oder der Mehrzahl sich zur Abströmseite (6) hin erstreckenden Elektrode(n) (2) steht.

2. Halterung (1) nach Patentanspruch 1, wobei der elektrische Leiter (8) eine Verlängerung (9) zur Durchführung durch eine Wand (10) der Abgasleitung (3) aufweist.

3. Halterung (1) nach Patentanspruch 1 oder 2, wobei der elektrische Leiter (8) in mindestens einer Nut (11) in der Scheibe (4) befestigt ist.

4. Halterung (1) nach einem der vorhergehenden Patentansprüche, wobei der elektrische Leiter (8) mit einem Verbindungsmaterial (12) an und/oder in der Scheibe (4) befestigt ist.

5. Halterung (1) nach einem der vorhergehenden Patentansprüche, wobei die Halterung einen Deckel aufweist, der auf der Abströmseite (6) der Scheibe (4) angeordnet ist, wobei der Deckel (13) Aussparungen (14) zur Aufnahme der Elektrode(n) (2) aufweist.

6. Halterung (1) nach einem der vorhergehenden Patentansprüche, wobei die eine oder die Mehrzahl der Elektrode(n) (2) und der elektrische Leiter (8) mittels mindestens eines der folgenden Wirkprinzipien miteinander verbunden ist:
- Formschluss,
- Kraftschluss und
- Stoffschluss.

7. Halterung (1) nach einem der vorhergehenden Patentansprüche, wobei die Scheibe (4) topfförmig ausgebildet ist mit einem zur Abströmseite (6) auskragenden äußeren Bereich (15).

8. Halterung (1) nach Patentanspruch 7, wobei der auskragende äußere Bereich (15) sich über mindestens eine Elektrode (2) hinaus entlang der Abgasleitung (3) erstreckt.

9. Halterung (1) nach einem der vorhergehenden Patentansprüche, wobei die Scheibe (4) etwa quer in die Abgasleitung (3) einbaubar ist und einen Querschnitt (16) der Abgasleitung (3) im Wesentlichen vollständig überdeckt.

10. Halterung (1) nach einem der vorhergehenden Patentansprüche, wobei die Scheibe (4) mindestens einen ersten und einen zweiten elektrischen Leiter (8), die von einander elektrisch isoliert sind, aufweist und eine erste Gruppe und eine zweite Gruppe von Elektroden (2) jeweils mit einem der elektrischen Leiter (8) in elektrischem Kontakt stehen.

11. Vorrichtung (17) in einer Abgasleitung (3) zur Ionisierung von Rußpartikeln im Abgas einer Verbrennungskraftmaschine (18), umfassend mindestens eine Halterung (1) nach einem der vorhergehenden Patentansprüche und einen in Strömungsrichtung (19) nachfolgend angeordneter Partikelabscheider (20).

12. Vorrichtung (17) nach Patentanspruch 11, wobei der Partikelabscheider (20) eine Gegenelektrode bildet.

## Claims

1. A mounting (1) having one or a multiplicity of electrode(s) (2) for generating electric fields in an exhaust line (3), **characterized in that** the mounting (1) has a disk (4) which is composed of an electrically insulating material and which has an inflow side (5) and an outflow side (6) and which has openings (7), through which an exhaust gas can flow from the inflow side (5) to the outflow side (6), and at least one electrical conductor (8) fastened on and/or in the disk (4), and wherein the electrical conductor (8), at least on the inflow side (5) of the disk (4), is covered by the electrically insulating material and is in electrical contact with the one or multiplicity of electrode(s) (2) that extend(s) toward the outflow side (6).

2. The mounting (1) as claimed in claim 1, wherein the electrical conductor (8) has an elongation (9) for being led through a wall (10) of the exhaust line (3).

3. The mounting (1) as claimed in claim 1 or 2, wherein the electrical conductor (8) is fastened in at least one groove (11) in the disk (4).

4. The mounting (1) as claimed in one of the preceding claims, wherein the electrical conductor (8) is fastened on and/or in the disk (4) by means of a connecting material (12).

5. The mounting (1) as claimed in one of the preceding claims, wherein the mounting has a cover which is arranged on the outflow side (6) of the disk (4), wherein the cover (13) has cutouts (14) for receiving the electrode(s) (2).

6. The mounting (1) as claimed in one of the preceding claims, wherein the one or multiplicity of electrode(s) (2) and the electrical conductor (8) are connected to one another by means of at least one of the following operating principles:
- positive locking,
- non-positive locking and
- material connection.

7. The mounting (1) as claimed in one of the preceding claims, wherein the disk (4) is of pot-shaped form with an outer region (15) that projects toward the outflow side (6).

8. The mounting (1) as claimed in claim 7, wherein the projecting outer region (15) extends along the exhaust line (3) beyond at least one electrode (2).

9. The mounting (1) as claimed in one of the preceding claims, wherein the disk (4) can be installed into the exhaust line (3) in an approximately transverse configuration and substantially completely spans a cross section (16) of the exhaust line (3).

10. The mounting (1) as claimed in one of the preceding claims, wherein the disk (4) has at least one first and one second electrical conductor (8) which are electrically insulated from one another, and a first group and a second group of electrodes (2) are in each case in electrical contact with one of the electrical conductors (8).

11. A device (17) in an exhaust line (3) for the ionization of soot particles in the exhaust gas of an internal combustion engine (18), comprising at least one mounting (1) as claimed in one of the preceding claims and a particle separator (20) arranged downstream in the flow direction (19).

12. The device (17) as claimed in claim 11, wherein the particle separator (20) forms a counter electrode.

## Revendications

1. Support (1) comprenant une électrode ou une pluralité d'électrodes (2) pour générer des champs électriques dans une conduite de gaz d'échappement (3), **caractérisé en ce que** le support (1) comprend un disque (4) constitué d'un matériau électriquement isolant présentant un côté d'entrée d'écoulement (5) et un côté de sortie d'écoulement (6) et des ouvertures (7) pouvant être traversées par un gaz d'échappement à partir du côté d'entrée d'écoulement (5) jusqu'au côté de sortie d'écoulement (6), ainsi qu'au moins un conducteur électrique (8) fixé sur et/ou dans le disque (4), et le conducteur électrique (8) étant, au moins au niveau du côté d'entrée d'écoulement (5) du disque (4), recouvert par le matériau électriquement isolant et se trouvant en contact électrique avec l'électrode ou la pluralité d'électrodes (2) s'étendant en direction du côté de sortie d'écoulement (6).

2. Support (1) selon la revendication 1, dans lequel le conducteur électrique (8) comprend un prolongement (9) pour le passage à travers une paroi (10) de la conduite de gaz d'échappement (3).

3. Support (1) selon la revendication 1 ou 2, dans lequel le conducteur électrique (8) est fixé dans au moins une rainure (11) dans le disque (4).

4. Support (1) selon l'une quelconque des revendications précédentes, dans lequel le conducteur électrique (8) est fixé sur et/ou dans le disque (4) à l'aide d'un matériau de liaison (12).

5. Support (1) selon l'une quelconque des revendications précédentes, le support comprenant un couvercle qui est disposé sur le côté de sortie d'écoulement (6) du disque (4), le couvercle (13) comprenant des évidements (14) pour recevoir l'électrode/les électrodes (2).

6. Support (1) selon l'une quelconque des revendications précédentes, dans lequel l'électrode ou la pluralité d'électrodes (2) et le conducteur électrique (8) sont reliés les uns aux autres au moyen d'au moins l'un des principes d'action suivants :
- engagement par complémentarité de formes,
- engagement par force et
- liaison de matière.

7. Support (1) selon l'une quelconque des revendications précédentes, dans lequel le disque (4) est réalisé en forme de pot comprenant une région extérieure (15) faisant saillie vers le côté de sortie d'écoulement (6).

8. Support (1) selon la revendication 7, dans lequel la région extérieure saillante (15) s'étend au-delà d'au moins une électrode (2) le long de la conduite de gaz d'échappement (3).

9. Support (1) selon l'une quelconque des revendications précédentes, dans lequel le disque (4) peut être installé approximativement transversalement dans la conduite de gaz d'échappement (3) et recouvre essentiellement complètement une section transversale (16) de la conduite de gaz d'échappement (3).

10. Support (1) selon l'une quelconque des revendications précédentes, dans lequel le disque (4) comprend au moins un premier et un deuxième conducteur électrique (8) qui sont isolés électriquement l'un de l'autre, et un premier groupe et un deuxième groupe d'électrodes (2) sont respectivement en contact électrique avec l'un des conducteurs électriques (8).

11. Dispositif (17) dans une conduite de gaz d'échappement (3) pour l'ionisation de particules de suie dans le gaz d'échappement d'un moteur à combustion interne (18), comportant au moins un support (1) selon l'une quelconque des revendications précédentes et un séparateur de particules (20) disposé à la suite de celui-ci dans le sens d'écoulement (19).

12. Dispositif (17) selon la revendication 11, dans lequel le séparateur de particules (20) forme une contre-électrode.
